(19) Europäisches Patentamt
European Patent Office
Office européen des brevets

(11) EP 4 498 368 A1

(12) EUROPEAN PATENT APPLICATION

(43) Date of publication:
**29.01.2025 Bulletin 2025/05**

(21) Application number: **23188038.6**

(22) Date of filing: **27.07.2023**

(51) International Patent Classification (IPC):
***G10L 21/0208*** ***(2013.01)*** ***G10L 21/0232*** ***(2013.01)***

(52) Cooperative Patent Classification (CPC):
**G10L 21/0232; G10L 21/0208**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Goodix Technology (HK) Company Limited**
**Sheung Shui (HK)**

(72) Inventors:
- **Jung, Sung Kyo**
  **3000 Leuven (BE)**
- **Tirry, Wouter Joos**
  **3000 Leuven (BE)**
- **Goyens, Rob**
  **3000 Leuven (BE)**
- **Cherala, Naveen**
  **3000 Leuven (BE)**

(74) Representative: **Nederlandsch Octrooibureau**
**P.O. Box 29720**
**2502 LS The Hague (NL)**

# (54) SYSTEM AND METHOD FOR LEVEL-DEPENDENT MAXIMUM NOISE SUPPRESSION

(57) A method for level-dependent minimum gain based on a maximum noise suppression function in a voice processing device, the method comprising receiving, by a processor, an input signal comprising noise, determining, by the processor, a level-dependent minimum gain based on level-dependent maximum noise suppression and a level of the input signal and suppressing, by the processor, the noise of the input signal, wherein the noise is suppressed based on the level-dependent minimum gain, wherein the level-dependent maximum noise suppression function provides lower level-dependent minimum gain for higher levels of the input signal and wherein the level of the input signal comprises an amplitude or a power of the input signal

Fig. 6

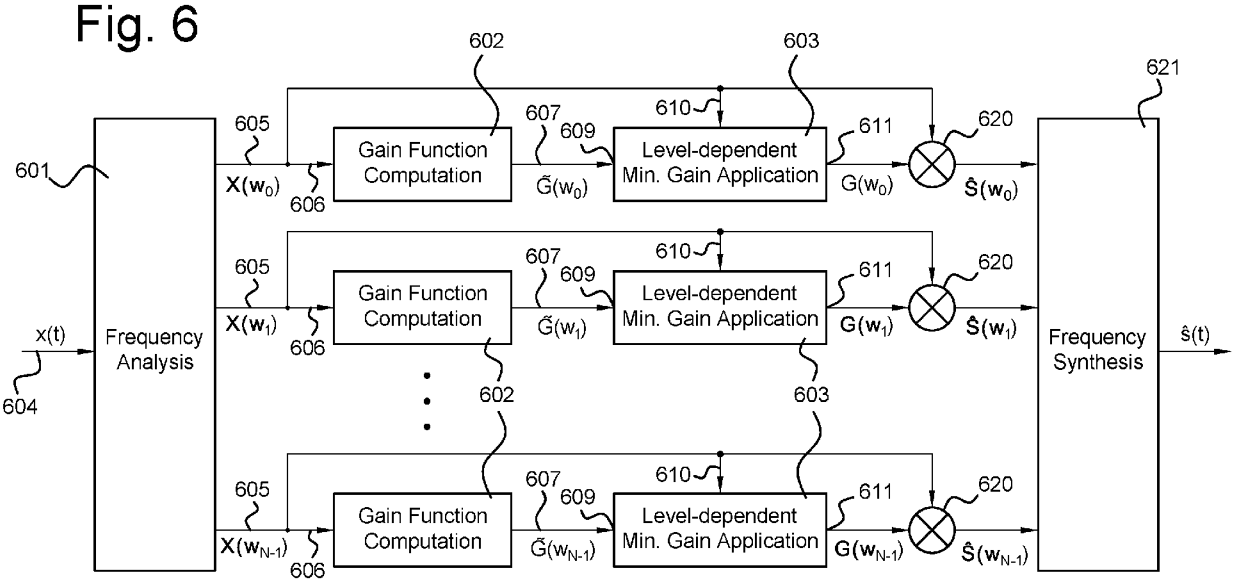


EP 4 498 368 A1

## Description

### Field of the invention

The present invention relates to a system for level-dependent maximum noise suppression. The present invention also relates to a method for level-dependent maximum noise suppression.

### Background art

Speech enhancement has been widely used in various speech-related applications, such as speech/speaker recognition for voice interface, hearing aids, and voice communication.

Various approaches for speech enhancement have been designed to adaptively suppress acoustic interferences (such as environmental noise, acoustic echo, or undesired talkers) depending on signal statistics, while preserving the desired speech signals as much as possible.

An optimal estimation of speech and noise is still a key issue in this field to cope in difficult acoustic situations. For example, sudden bursts of non-stationary noise (like baby crying, dog barking, honk noise, and glitches) are still difficult to discriminate and deal with. If very loud noise components are not fully suppressed, the residual noise components can be boosted again by adaptive gain control and/or dynamic range control in voice communication chains. As a result, it may sound very annoying and even harmful to the ear after whole processing in the voice communication systems or hearing aids. In addition, this residual noise can degrade the recognition performance in speech/speaker recognition.

Most speech enhancement algorithms have been designed to estimate an optimal gain function in each frequency bin or band, based on estimated signal statistics of speech and noise. Then the estimated gain function for a given frequency bin or band is multiplied by the input signal segment in each corresponding frequency bin or band to obtain enhanced speech signal. In these known approaches which are fully based on advanced signal processing technologies, the estimation of speech and noise statistics has been a key problem to solve. In special, non-stationary noise components are more difficult to be discriminated from speech components. In this case, a falsely-estimated gain function causes significant speech attenuation or poor noise suppression performance.

In addition, (unsuppressed) residual noise can be modulated or fluctuated by inaccurate and unreliable estimation of gain function. In order to avoid or minimize perceptual artifacts (like noise modulation and/or musical tone), many solutions have limited the gain function to a lower bound such that the gain function must be higher than said lower bound, which can minimize these kinds of perceptual artifacts, by allowing some loss of noise suppression performance. In general, there is a trade-off relationship between perceptual artifacts and noise performance. To improve perceptual artifacts, a minimum noise level is allowed by limiting the gain function to have a value higher than a lower bound. By this mechanism some noise suppression performance may be lost, but noise modulation/pumping artifacts are improved. To compromise between perceptual artifacts and noise suppression performance, some algorithms deploy fixed or adaptive lower-bound schemes, depending on long-term Signal-to-Noise Ratio (SNR) estimate and/or signal statistics. However, SNR estimation faces several technical issues. On one hand, SNR is also not always reliable because it is not possible to calculate SNR before clear detection of speech. For instance, if no one is speaking yet, it is not possible to calculate reliable SNR. On the other hand, sudden bursts of loud noise are not properly taken into (long-term) SNR estimation. When an instantaneous noise level has not been properly considered to estimate a lower bound for gain function in most speech enhancement algorithms, sudden bursts of loud noise may not be fully suppressed, especially when they are very loud compared to desired speech level.

This means that, for complete suppression of high-level noise, a lower bound needs to be further decrease. If a system can suppress noise up to, for instance, 32dB, the system will work for some noise types with a certain level, but not for loud noise. For complete suppression for loud noise, if we set up the system to suppress noise up to 60dB or higher, the increased noise suppression can cause more noise pumping/modulation.

Due to recent advancement on deep learning networks, voice quality in commercialized services/products has been significantly improved due to better discrimination between speech and non-stationary noise components. The estimated gain function still needs to be limited to a lower bound to have natural residual noise qualities as well as avoid perceptual artifacts. Sudden bursts of loud noise are still an issue to be properly dealt with.

US 8,107,656 discloses level-dependent noise suppression by introducing an adaptive weighting factor depending on input level, as described in the equation below:

$$\hat{S}(\omega) = (1-a)X(\omega) + aG(\omega)X(\omega) \qquad (1)$$

where $X(\omega)$ is the input signal, $\hat{S}(\omega)$ is the enhanced input signal, $G(\omega)$ is the estimated gain, and *a* is a level-dependent weighting factor. Figure 1 represents several weighting factors *a* as a function of input signal level in decibels (dBs). For example, if the bold line, *a*, is selected in the figure, no noise suppression is applied for low-level ambient noise below 50dB Sound Pressure Level (SPL), while for a high- level noise above 62dB SPL, full suppression by $G(\omega)$ is applied, and in other cases between 50dB SPL to 62dB SPL, a relaxed noise suppression is applied.

The main purpose of US 8,107,656 is to protect low-level ambient noise (like everyday exposure noise) for hearing aids applications. This approach is focused on preserving low-level noise signals by a level-dependent scale factor ***a*** which relaxes or fully blocks the effect of noise reduction depending on the noise level of the input signal. For high-level noise signals, the suppression performance completely depends on the estimated gain, $G(\omega)$, in equation (1). Therefore, if a proper handling for loud noise is not considered in the gain function, this proposed approach cannot properly deal with sudden bursts of loud noise.

US 6,757,395 discloses a noise reduction apparatus and method based on a multi-band spectral subtraction scheme for hearing aid devices and other electronic sound systems wherein:

$$\left|\hat{S}(\omega)\right|_{dB} = |G(\omega)|_{dB} + |X(\omega)|_{dB} \qquad (2)$$

The gain function, $|G(\omega)|_{dB}$, in dB consists in a gain scale function and a maximum attenuation function as follows:

$$|G(\omega)|_{dB} = \lambda\big(SNR(\omega)\big)f\left(\hat{N}(\omega)\right) \qquad (3)$$

where $\lambda(SNR(\omega))$ is the gain scale function in a range of -1 to 0, and $f(\hat{N}(\omega))$ is the maximum attenuation function of the noise signal estimate $\hat{N}(\omega)$. The gain scale function, $\lambda(SNR(\omega))$, is a pre-defined three-segment piecewise linear function, depending on an estimate of speech and noise envelope in each frequency band. Figure 2A, 2B and 2C shows the predefined values of $\lambda(SNR(\omega))$ at some selected frequency bands in each mode of noise suppression. Figure 2A, 2B and 2C, x-axis is $SNR(\omega)$ and y-axis is $\lambda(SNR(\omega))$. Depending on the noise suppression mode such as low, medium and high, the values of $\lambda$, are different in each frequency band. The maximum attenuation function, $f(\hat{N}(\omega))$, can be either a constant value (e.g. 18 dB) or equal to the estimated noise envelope, $\hat{N}(\omega)$, in dB.

The system disclosed in US 6,757,395 directly estimates gain function for spectral subtraction based on the noise envelope estimate as well as the SNR estimate. It means that the gain function is highly sensitive to both under- and over-estimation of speech and noise envelope estimates. If noise estimate $\hat{N}(\omega)$ is not reliable for sudden bursts of loud noise or non-stationary noise, these types of noise cannot be fully suppressed. In addition, the behavior and performance in bad SNR conditions highly depends on a noise suppression mode, rather than signal statistics.

The recent voice communication devices deploy multichannel speech enhancement technologies to remove noise, interference and reverberation from degraded speech signals captured on multiple microphones. Traditional approaches are fully based on signal processing concepts like linear spatial filters and post processors based on suppression gain function like spectral subtraction, as shown in Figure 3A. In Figure 3A, a residual signal from an acoustic echo canceller/cancellation is input to a beamformer so that the desired speech can be estimated by forming a beam to an interested direction and a post processor does further post processing so that TxOut is an enhanced signal.

Thus, a new approach is needed to provide improved speech enhancement algorithms without the cited disadvantages.

## Summary of the invention

The invention relates to a method for level-dependent maximum noise suppression in a voice processing device, the method comprising receiving, by a processor, an input signal comprising noise, determining , by the processor, a level-dependent minimum gain based on a level-dependent maximum noise suppression function and a level of the input signal, and suppressing, by the processor, the noise of the input signal, wherein the noise is suppressed based on the level-dependent minimum gain, wherein the level-dependent maximum noise suppression function provides lower level-dependent minimum gain for higher levels of the input signal and wherein the level of the input signal comprises an amplitude or a power of the input signal.

The level-dependent minimum gain may depend on estimated noise spectra of the input signal. The noise may be suppressed based on an optimal estimated gain which is the maximum of an estimated gain function and the level-dependent minimum gain, wherein the estimated gain function $\hat{G}(\omega)$ is calculated as $\tilde{G}(\omega) = 1 - \alpha\frac{|\tilde{N}(\omega)|^{\beta}}{|X(\omega)|^{\beta}}$, wherein $\alpha$ is an over-subtraction factor and $|\tilde{N}(\omega)|$ is the estimated noise spectra, wherein $\beta$ is set to one when applying magnitude spectral subtraction or $\beta$ is set to two when applying power spectral subtraction; wherein the level-dependent minimum gain is calculated as $G_{Level}^{min}(\omega) = 10^{\left(\frac{-f_{Level}(\omega)}{20}\right)}$ and wherein the level-dependent maximum noise suppression function $f_{Level}(\omega)$) maps the level of the input signal $X(\omega)$ to the maximum amount of noise suppression.

The level-dependent maximum noise suppression function may be a monotonically increasing function. The level-dependent maximum noise suppression function may further be a piecewise linear function. The level-dependent maximum noise suppression function may be a non-linear function, such as a sigmoid shape.

The method may further comprise determining, by the processor, the level-dependent minimum gain comprises determining whether the level of the input signal is lower or equal than a minimum level $X_{Level}^{min}$ and/or whether the level of the input signal is higher or equal than a maximum level $X_{Level}^{max}$, and wherein the minimum level $X_{Level}^{min}$ is lower than the maximum level $X_{Level}^{max}$ and wherein a first predetermined value $f_{Level}^{min}$ is lower than a second predetermined value $f_{Level}^{max}$; and if the level of the input signal is lower or equal than the minimum level $X_{Level}^{min}$, the level-dependent minimum gain may be calculated based on the first predetermined value $f_{Level}^{min}$; and, if the level of the input signal is higher or equal than the maximum level $X_{Level}^{max}$, the level-dependent minimum gain may be calculated based on the second predetermined value $f_{Level}^{max}$; and if the level of the input signal is lower than the maximum level $X_{Level}^{max}$ and the level of the input signal is higher than the minimum level $X_{Level}^{min}$, the level-dependent minimum gain is higher than the first predetermined value $f_{Level}^{min}$ and lower than the second predetermined value $f_{Level}^{max}$.

The method may further comprise splitting the input signal into a plurality of frequency bands or bins and determining, by the processor, the level-dependent minimum gain may comprise determining a level-dependent minimum gain per frequency band or bin based on a level-dependent maximum noise suppression function for the corresponding frequency band or bin and a level of the input signal in the corresponding frequency band or bin.

The method may further comprise determining, by the processor, a SNR-dependent minimum gain based on a SNR of the input signal; wherein the processor may suppress the noise by combining the SNR dependent minimum gain and the level-dependent minimum gain.

The method may further comprise calculating a minimum value between the level-dependent minimum gain and the SNR-dependent minimum gain, and suppressing the noise based on the maximum of an estimated gain function and the minimum value, wherein the estimated gain function $\tilde{G}(\omega)$ is calculated based on estimated noise spectra and the spectral magnitude of the input signal.

The estimated gain function may be calculated as $\tilde{G}(\omega) = 1 - \alpha \frac{|\tilde{N}(\omega)|^{\beta}}{|X(\omega)|^{\beta}}$, wherein $\alpha$ is an over-subtraction factor and $|\tilde{N}(\omega)|$ is the estimated noise spectra and, $|X(\omega)|$ the magnitude spectrum of the input signal, and $\beta$ is set to one when applying magnitude spectral subtraction or $\beta$ is set to two when applying power spectral subtraction. The estimated function may be calculated using any other suitable method.

The method may further comprise suppressing the noise based on a minimum between the SNR-dependent minimum gain and $\frac{G_{SNR}^{min}(\omega)\cdot\hat{N}_{SN}(\omega)+\delta}{|X(\omega)|}$ where, $G_{SNR}^{min}(\omega)$ is the SNR-dependent minimum gain, $\hat{N}_{SN}(\omega)$) is a estimation of amplitude/magnitude of stationary noise of the input signal, $\delta$ is a given offset, $X(\omega)$ is the input signal and $|X(\omega)|$ is the magnitude spectrum of $X(\omega)$.

The processor may be used in the target and/or loss function of training a neural network based noise suppressors. The invention also related to an apparatus for level-dependent maximum noise suppression in a voice processing device, the apparatus comprising a memory and a processor communicatively connected to the memory and configured to execute instructions to perform the described method. The invention also relates to a computer program which is arranged to perform the described method.

In this invention, a novel solution is proposed, level-dependent maximum noise suppression (that is, level-dependent minimum gain) which can efficiently and adaptively suppress sudden bursts of loud noise. The proposed solution efficiently controls the maximum noise suppression (or minimum gain) amount depending on the input noise level to fully suppress sudden bursts of loud noise. Depending on an input signal level (which is the amplitude or the power of the input signal), the minimum gain or maximum noise suppression amount is mainly controlled. The maximum noise suppression or minimum gain can be easily tuned depending on voice applications and/or end-point devices. Figures 7A and 7B show an example of how to tune the curve of maximum noise suppression function, which is based on a monotonically increasing function. The horizontal axis in Figures 7A and 7B indicates the input signal level, and the vertical axis shows the maximum noise suppression amount, usually in the decibel scale. The minimum gain is calculated by passing the maximum noise suppression amount from a logarithmic scale to a linear scale. The input signal indicates the signal used for computing gain function for speech enhancement. Depending on speech enhancement approach, it can be a microphone signal, a residual signal from an acoustic echo canceller, or the output signal of a beamformer. As shown in Figures 7A and 7B, two knee points, ( $X_{Level}^{min}, f_{Level}^{min}$ ) and ( $X_{Level}^{max}, f_{Level}^{max}$ ), can be properly tuned while still allowing more noise suppression for input signals with high level noise components. In Figures 7A and 7B, the maximum noise suppression is determined by the input signal level only.

Usually, the speech and noise discrimination is done by a gain function. In this way, if the gain function is lower than the minimum gain, the component in the corresponding bin or band is considered as noise, and the noise suppression amount is controlled by the input signal level.

The knee points ( $X_{Level}^{min}, f_{Level}^{min}$ ) and $X_{Level}^{max}, f_{Level}^{max}$ in Figures 7A and 7B can be tuned depending on voice applications and/or acoustic design for an end-point terminal device like smartphone, tablet, earbud and so on. This is because the input signal level can have different range depending on the application, for instance, due to different hardware and software. Thus, proper tuning depending on a use case (voice application) as well as an end-point device may be needed.

In addition, a linear or non-linear mapping curve can be used as shown in Figures 7A and 7B wherein Figure 7A shows a linear mapping between the input signal level and the maximum noise suppression and Figure 7B shows a non-linear mapping between the input signal level and the maximum noise suppression.

The invention allows for level-dependent maximum noise suppression, or, what is the same, level-dependent minimum gain, and can be efficiently integrated to various gain function estimation methods based on traditional DSP approach, pure Deep Neural Network (DNN) approach, or hybrid of two approaches. In addition, it can be also combined with an existing long-term SNR-dependent noise suppression scheme.

The invention provides more efficient noise suppression especially for sudden bursts of loud noise, while no speech quality being degraded. In this way, noise suppression performance can be increased, while perceptual artifacts are minimized.

The maximum noise suppression (or minimum gain) amount in each bin or band is controlled by an input signal level, not by a noise estimate, in order to efficiently suppress sudden bursts of loud noise.

The invention can be easily and flexibly integrated to various approaches of gain function estimation as well as minimum gain control (i.e. maximum noise suppression).

The maximum noise suppression can be easily tunable, depending on voice applications and/or end-point devices.

The level-dependent maximum noise suppression can be implemented in two alternative ways: absolute or adaptive maximum noise suppression approaches.

## Brief description of the drawings

The present invention will be discussed in more detail below, with reference to the attached drawings, in which:

Figure 1 shows a representation of cancelling the noise reduction effect as a function of the input level of the signal according to the prior art.

Figures 2A, 2B and 2C show a representation of gains (at some selected frequency bands) as a function respectively of high, medium and low noise according to the prior art.

Figures 3A-D schematically show a multi-channel speech enhancement system respectively as a traditional approach, a hybrid approach where DNN replaces post-processing, a hybrid approach where DNN replaces beamforming and post-processing and a fully DNN approach according to the prior art.

Figure 4 schematically shows a gain system according to the prior art.

Figure 5A shows fixed noise suppression according to the prior art.

Figure 5B shows SNR-dependent noise suppression according to the prior art.

Figure 6 schematically shows an input signal level-dependent gain system according to an embodiment of the invention.

Figures 7A and 7B show respectively a representation of noise suppression as a lineal and a non-lineal function of the input signal level according to an embodiment of the invention.

Figure 8A shows fixed noise suppression according to the prior art.
Figure 8B shows level-dependent noise suppression according to an embodiment of the invention.
Figure 9 shows an example of input signal levels as a function of time during various acoustic situations.
Figure 10A SNR-dependent noise suppression according to the prior art. The different lines represent different SNR conditions in each frequency band (or bin).
Figure 10B shows SNR- and level-dependent noise suppression according to an embodiment of the invention. The different lines represent different SNR conditions in each frequency band (or bin).
Figure 11 shows a flowchart of a method according to an embodiment of the invention.

The figures are meant for illustrative purposes only, and do not serve as restriction of the scope or the protection as laid down by the claims.

**Description of embodiments**

In recent years, supervised/unsupervised speech enhancement using deep neural networks (DNN) has become the main methodology. For multi-channel processing, DNN is generally incorporated with traditional spatial filters to provide improved discrimination between target speech components and acoustic interferences. In another alternative approaches, DNN may fully replace all traditional Digital Signal Processing (DSP) approaches. Performance is highly depending on post-processing where gain functions, usually in frequency domain, are estimated to discriminate speech signals and acoustic interferences. As mentioned above, gains can be estimated based on traditional DSP approaches (Figure 3A) or DNN-based approaches (Figures 3B-D). DNN-based approach can be implemented in various ways: hybrid approach of traditional and DNN-based approach and fully DNN approach. Figures 3B-D show respectively an example of a DNN system for multi-channel speech enhancement respectively as a traditional approach, a hybrid approach where DNN replaces post-processing, a hybrid approach where DNN replaces beamforming and post-processing and a fully DNN approach.

The noisy signals captured on microphones can be represented in the time domain by the following equation:

$$x(t) = s(t) + n(t) \qquad (4)$$

where *x*(*t*)*,* *s*(*t*)*,* and *n*(*t*) are the noisy signals, the target speech signals, and the acoustic interferences, respectively. In the frequency domain, the noisy signals can be expressed as:

$$X(\omega) = S(\omega) + N(\omega) \qquad (5)$$

where $X(\omega)$, $S(\omega)$, and $N(\omega)$ are the transformed spectrum of the noisy signals, of the target speech signals, and of the noise interferences, respectively. As shown in Figure 4, an optimal gain function, $G(\omega)$, is estimated in each frequency band or bin, in order to get enhanced speech spectrum, $\hat{S}(\omega)$, from noisy spectrum, $X(\omega)$ as follows:

$$\hat{S}(\omega) = G(\omega)X(\omega) \qquad (6)$$

An optimal gain function, $G(\omega)$, is usually estimated by the following steps below:

- An estimated gain function $\tilde{G}(\omega)$ is computed
- A minimum gain $G^{min}(\omega)$ is applied to $\tilde{G}(\omega)$

As said, firstly, the estimated gain function, $\tilde{G}(\omega)$, in each frequency band or bin can be computed in various ways ranging from traditional DSP approaches to DNN-based approaches. For example, the gain function can be estimated by traditional DSP approaches which are based on spectral subtraction, minimum mean-square error, and signal subspace approaches. As a non-limiting example, below equation (7) describes how to determine the gain function based on a spectral subtraction approach:

$$\left|\hat{S}(\omega)\right|^{\beta} = |X(\omega)|^{\beta} - \alpha\left|\tilde{N}(\omega)\right|^{\beta} = \tilde{G}(\omega)|X(\omega)|^{\beta} \qquad (7)$$

where $\alpha$ is an over-subtraction factor and $|\tilde{N}(\omega)|$ is the estimated noise spectra. To apply magnitude spectral subtraction, $\beta$ is set to one. To apply power spectral subtraction, $\beta$ is set to two. A typical range for the over-subtraction factor $\alpha$ is between

zero and two wherein $\alpha$ = 0 means no suppression, $\alpha$ = 1 indicates full suppression and $\alpha$ > 1, over-subtraction.

From equation (7), the estimated gain function $\tilde{G}(\omega)$ in a spectral subtraction approach can be expressed as follows:

$$\tilde{G}(\omega) = 1 - \alpha \frac{|\tilde{N}(\omega)|^{\beta}}{|X(\omega)|^{\beta}} \tag{8}$$

Equation (8) shows an example of how to estimate gain function based on amplitude/power spectral subtraction. In addition, various deep neural network (DNN) based approaches have been recently tried to estimate the gain function. Examples of such DNN approaches can be found, for example, in "A regression approach to speech enhancement based on deep neural networks," by Y. Xu, J. Du, L.-R. Dai, and C.-H. Lee, IEEE Transactions on Acoustic, Speech and Signal Processing, pp. 7-19, Jan. 2015, in "Long short-term memory for speaker generalization in supervised speech separation" by J. Chen and D. L. Wang, The Journal of the Acoustical Society of America, pp. 4705-4714, Jun. 2017, or in "Convolutional Neural Network-based Speech Enhancement for Cochlear Implant Recipients" by N. Mamun, S. Khorram and J. Hansen, arXiv: 1907.02526, 2019.

In the next step, to avoid audible artifacts like noise pumping caused by discernible noise modulation and/or musical tones caused by isolated residual peaks of noise, the estimated gain function $\tilde{G}(\omega)$ is limited by a lower bound or minimum gain $G^{min}(\omega)$, which corresponds to a pre-defined amount of maximum noise suppression. As said, noise pumping is a general and common issue, because it is not possible to perfectly discriminate speech and noise components in each frequency bin or band. In this way, noise components can be almost perfectly suppressed in some frequency bands (or bins), but not in other bands (or bins). The residual noise components remaining in some bins may cause audible noise pumping or modulation.

As shown in Figure 4, the optimal estimated gain function, $G(\omega)$, is generally obtained from the estimated gain function, $G(\omega)$, by limiting it to the minimum gain, $G^{min}(\omega)$, to minimize various audible artifacts (noise pumping and/or noise modulation).

$$G(\omega) = \max\left(\tilde{G}(\omega), G^{min}(\omega)\right) \tag{9}$$

In equation (9) the optimal estimated gain function $\tilde{G}(\omega)$ is equal to the maximum value between the estimated gain function $\tilde{G}(\omega)$ and the minimum gain $G^{min}(\omega)$. The minimum gain can be differently defined depending on each solution. As described below, it can be fixed or adaptive depending on frequency band, SNR or input level. Here a trade-off between noise suppression performance and noise modulation needs to be considered because more noise pumping is expected when more noise suppression (less gain) is applied. In this way, many enhancement algorithms apply a minimum bound (minimum gain $G^{min}(\omega)$) to limit noise pumping while allowing some loss of noise suppression performance. By doing this, the optimal estimated gain function $G(\omega)$ can avoid reaching small values. For instance, if the estimated gain function $\tilde{G}(\omega)$ has values from zero to one wherein one indicates no noise suppression and zero indicates full noise suppression, setting a minimum gain $G^{min}(\omega)$ may avoid that the optimal estimated gain function $G(\omega)$ has values close to zero. The range of the estimated gain function $\tilde{G}(\omega)$ is 0 to 1. If the estimated gain function $\tilde{G}(\omega)$ is zero (or a very small value) in some noise-only segments and a non-zero value in other noise-only segments, it causes noise pumping/modulation in the output.

Many well-known approaches calculate the lower bound or minimum gain $G^{min}(\omega)$ for the estimated gain function $\tilde{G}(\omega)$ based on a long-term SNR estimate to allow more or less noise suppression depending on SNR conditions and/or different pre-defined values based on various requirements for speech applications. In these approaches based on long-term SNR estimate, the estimated gain function $\tilde{G}(\omega)$ is limited by an SNR-dependent minimum gain $G_{SNR}^{min}(\omega)$ that depends on the SNR estimate as indicated below:

$$G(\omega) = \max\left(\tilde{G}(\omega), G_{SNR}^{min}(\omega)\right) \tag{10}$$

wherein the SNR-dependent minimum gain $G_{SNR}^{min}(\omega)$ in a linear scale is translated from a maximum suppression function $f_{SNR}(\omega)$ in a log scale as follows:

$$G_{SNR}^{min}(\omega) = 10^{\left(\frac{-f_{SNR}(\omega)}{20}\right)} \quad (11)$$

Equation (11) is an example formula to translate a log-scale value to a linear-scale value. In this way, $G_{SNR}^{min}(\omega)$ and $f_{SNR}(\omega)$ are two terms which are equivalent. $f_{SNR}(\omega)$ is a log-scaled value and $G_{SNR}^{min}(\omega)$ is its corresponding value in a linear domain, as described in equation (11). To determine the maximum suppression function $f_{SNR}(\omega)$, there are mainly two known approaches: a fixed and an adaptive approach for maximum suppression which define the maximum amount of noise suppression.

In case of a fixed approach, a pre-defined value for maximum suppression is applied for all bands (or bins). For that, the maximum suppression function $f_{SNR}(\omega)$ is set to a pre-defined value which is constant and, in this way, the SNR-dependent minimum gain $G_{SNR}^{min}(\omega)$ becomes a constant value.

The fixed approach is shown in Figure 5A wherein the horizontal axis corresponds to the long-term SNR estimated and the vertical axis corresponds to the maximum noise suppression which depends on the SNR-dependent minimum gain $G_{SNR}^{min}(\omega)$ For an adaptive approach, the maximum suppression function $f_{SNR}(\omega)$ between two pre-defined values of long-term SNR estimates, $SNR^{min}$ and $SNR^{max}$, is adaptively determined based on the different long-term SNR estimates in each bin or band. This is shown in Figure 5B wherein the maximum noise suppression depends on the long-term SNR estimate between two points ( $SNR^{min}, f_{SNR}^{min}$ ) and ( $SNR^{max}, f_{SNR}^{max}$ ). The mapping function between two points can be monotonically increasing or decreasing depending on voice applications.

As an example, if the points ( $SNR^{min}, f_{SNR}^{min}$ ) and ( $SNR^{max}, f_{SNR}^{max}$ ) in Figure 5B are (0 dB, 26 dB) and (20 dB, 32 dB) respectively, then when the SNR estimate is below 0 dB (bad SNR), the maximum noise suppression amount will be 26 dB, if the SNR estimate is above 20 dB (good SNR), the maximum noise suppression amount will be 32 dB, while for SNR estimate values between 0 dB and 20 dB, the maximum noise suppression will be an interpolated value between the maximum noise suppression ( $f_{SNR}^{min}$ ) at 0 dB and the maximum noise suppression ( $f_{SNR}^{max}$ ) at 20 dB.

In both fixed and adaptive approaches, the maximum noise suppression function $f_{SNR}(\omega)$ is dependent or independent on long-term SNR estimate in each frequency bin or band, and therefore provides a constant value of maximum suppression irrespective to the loudness of noise interference. For this reason, sudden bursts of noise with very high amplitudes may not be fully suppressed or attenuated.

Figure 6 schematically shows an input signal level dependent minimum gain system according to an embodiment of the invention. The minimum gain of a system indicates the maximum noise suppression of the system. In this way, by providing a minimum gain, a maximum noise suppression is also provided. The invention will be explained by referring to a minimum gain but the expression minimum gain is interchangeable with the expression maximum noise suppression.

The system of Figure 6 comprises frequency analysis means 601 comprising an input 604 and a plurality $N$ of outputs 605 wherein the frequency analysis means 601 is configured to receive an input signal in the time domain $x(t)$ at its input 604, to generate the input signal in the frequency domain $X(\omega)$ by calculating the transformed spectrum of $x(t)$, to split the input signal in the frequency domain $X(\omega)$ into a plurality $N$ of frequency bands (or bins) $X(\omega) = [X(\omega_0), \ldots, X(\omega_{N-1})]$ each having a different bandwidth, and to send respectively the plurality $N$ of frequency bands (or bins) $X(\omega_0), \ldots, X(\omega_{N-1})$ to the plurality $N$ of outputs 605.

The system of Figure 6 further comprises a plurality $N$ of gain function computation means 602 comprising each one an input 606 and an output 607, wherein the plurality of inputs 606 of the plurality $N$ of gain function computation means 602 are respectively coupled to the plurality $N$ of outputs 605 of the frequency analysis means 601 to receive the plurality $N$ of frequency bands (or bins) $X(\omega_0), \ldots, X(\omega_{N-1})$ respectively. The plurality N of gain function computation means 602 are the configured to calculate a plurality $N$ of estimated gain functions $\hat{G}(\omega) = [\tilde{G}(\omega_0), \ldots, \tilde{G}(\omega_{N-1})]$ based on the plurality $N$ of frequency bands (or bins) $X(\omega_0), \ldots, X(\omega_{N-1})$ respectively and to send the plurality $N$ of estimated gain functions $\tilde{G}(\omega_0), \ldots, \tilde{G}(\omega_{N-1})$ respectively to the corresponding output 607 of the plurality $N$ of gain function computation means 602. Each of the estimated gain functions $\tilde{G}(\omega_0), \ldots, \tilde{G}(\omega_{N-1})$ can be calculated by any known method as the ones explained above for the estimated function $\tilde{G}(\omega)$.

The system of Figure 6 also comprises a plurality $N$ of level-dependent minimum gain application means 603 comprising each one a first input 609, a second input 610 and an output 611, wherein each of the first inputs 609 of the plurality $N$ of level-dependent minimum gain application means 603 are coupled to the corresponding output 607 of the plurality $N$ of gain function computation means 602 to receive respectively the corresponding estimated gain function among the plurality $N$ of estimated gain functions $\tilde{G}(\omega_0), \ldots, \tilde{G}(\omega_{N-1})$. In a similar way, each of the second inputs 610 of the plurality $N$ of level-dependent minimum gain application means 603 are coupled to the corresponding output among the plurality $N$ of outputs 605 of the frequency analysis means 601 to receive respectively the corresponding frequency band (or bin) among the plurality $N$ of frequency bands (or bins) $X(\omega_0), \ldots, X(\omega_{N-1})$.

The plurality $N$ of level-dependent minimum gain application means 603 are configured to calculate a plurality $N$ of optimal gain functions $\tilde{G}(\omega) = [G(\omega_0), \ldots, G(\omega_{N-1})]$ respectively based on the plurality $N$ of estimated gain functions $\tilde{G}(\omega_0), \ldots, \tilde{G}(\omega_{N-1})$ and a corresponding level of the plurality $N$ of frequency bands (or bins) $X(\omega_0), \ldots, X(\omega_{N-1})$. The plurality $N$ of level-dependent minimum gain application means 603 are configured to send the plurality $N$ of optimal gain functions $G(\omega_0), \ldots, \tilde{G}(\omega_{N-1})$ respectively to the output 601 of the plurality $N$ of level-dependent minimum gain application means 603.

The system of Figure 6 comprises further n multipliers 620 configured to calculate enhanced signals $\hat{S}(\omega) = [\hat{S}(\omega_0), \ldots, \hat{S}(\omega_{N-1})]$ by respectively multiplying $X(\omega_0), \ldots, X(\omega_{N-1})$ and $G(\omega_0), \ldots, G(\omega_{N-1})$. Finally, the system of Figure 6 comprises frequency synthesis means 621 configured to generate an output signal $\hat{s}(t)$ based on the enhanced signals $\hat{S}(\omega_0), \ldots, \hat{S}(\omega_{N-1})$.

The functioning of the level-dependent minimum gain application means 603 will be explained now in reference to a generic level-dependent minimum gain application means 603 receiving the estimated gain function $\tilde{G}(\omega_0)$ and the input signal $X(\omega_0)$ merely for example purposes but can be extended to any of the other level-dependent minimum gain application means 603 receiving the corresponding estimated gain function of the plurality $N$ of estimated gain functions $\tilde{G}(\omega_0), \ldots, \tilde{G}(\omega_{N-1})$ and the corresponding level of the plurality $N$ of frequency bands (or bins) $X(\omega_0), \ldots, X(\omega_{N-1})$.

The level-dependent minimum gain application means 603 uses the estimated gain function $\tilde{G}(\omega_0)$ and the level of the input signal $X(\omega_0)$ to determine which minimum gain is used to compromise a trade-off between noise suppression performance and noise modulation, that is, to suppress enough noise while minimizing noise modulation.

Figures 7A and 7B show an example of mapping functions for maximum noise suppression. The functions are a monotonically increasing function, which is piecewise linear or non-linear. In addition, this function can be designed by frequency independent or dependent scheme depending on voice applications. As explained before, there are minimum gain schemes that use a fixed or SNR-dependent minimum gain scheme. A fixed minimum gain scheme explained with reference to Figure 5A and Equation (9) can be depicted over input signal level, as shown in Figure 8A. The y-axis in Fig 8A shows the maximum noise suppression which is limited by the bound $f^{max}$. With this figure (Fig 8A), the expected amount of noise suppression is always below $f^{max}$, even in case of full suppression being applied.

Furthermore, an adaptive SNR-dependent minimum gain scheme, explained with reference to Figure 5B and Equation (10), can be depicted over input signal level, as shown in Figure 10A. In this way, equations (9) and (10) show how to bound the optimal gain function $G(\omega)$ in the fixed and adaptive schemes, respectively. Then the optimal gain function $G(\omega)$ can be obtained based on the estimated gain function $\tilde{G}(\omega)$. $G^{min}(\omega)$ is a fixed minimum gain value over all frequency bands (or bins), while $G_{SNR}^{min}(\omega)$ is an adaptive minimum gain value depending on estimated SNR. Fig 5A shows a fixed maximum noise suppression, which corresponds to $G^{min}(\omega)$ while Fig 5B shows an adaptive maximum noise suppression, which corresponds to $G_{SNR}^{min}(\omega)$.

In the present invention, the minimum gain application is improved by varying the minimum gain $G^{min}(\omega)$ according to the level of the input signal $X(\omega)$. The present invention can be efficiently combined any gain-based suppression scheme which limits estimated gains by a minimum gain scheme, a fixed or adaptive minimum gain scheme. As explained before, the minimum gain $G^{min}(\omega)$ allows to minimize artefacts like noise pumping or musical tones.

Below equation (12) and Figure 8B show how to apply level-dependent minimum gain for a fixed minimum gain scheme. On the other hand, below equation (14) and Figure10B show the same for an adaptive minimum gain scheme based on SNR estimates.

For Figures 8B and 10B, a tuned mapping curve is necessary to determine a level-dependent minimum gain. However, an alternative solution could adaptively determine a level-dependent minimum gain depending on the level of the input signal and the estimated noise spectra.

The proposed level-dependent maximum noise suppression means 603 can be efficiently integrated to various gain function estimation methods based on traditional DSP approach, pure DNN approach, or hybrid of two approaches.

The minimum gain $G^{min}(\omega)$ may be calculated according to two different embodiments.

According to a first embodiment of the invention, the minimum gain $G^{min}(\omega)$ may be calculated as a level-dependent minimum gain $G_{Level}^{min}(\omega)$ based on a level-dependent maximum noise suppression function $f_{Level}(\omega)$ such that the optimal gain function $G(\omega)$ will be:

$$G(\omega) = \max\left(\tilde{G}(\omega), G_{Level}^{min}(\omega)\right) \quad (12)$$

where $G_{Level}^{min}(\omega)$ is calculated from the following equation:

$$G_{Level}^{min}(\omega) = 10^{\left(\frac{-f_{Level}(\omega)}{20}\right)} \quad (13)$$

Figure 8A shows an example of maximum noise suppression with a fixed scheme according to the prior art. Figure 8B shows an example of maximum noise suppression with a level-dependent scheme according to the first embodiment. The level-dependent scheme of Figure 8B shows that maximum noise suppression can be varied depending on the level of the input signal $X(\omega)$, while the maximum noise suppression amount is always same in the fixed suppression scheme of Figure 8A. The level-dependent scheme of Figure 8B in the example is based on a level-dependent maximum noise suppression function $f_{Level}(\omega)$ that has two knee points, namely a first knee point 801 and a second knee point 803, that need to be tuned or defined. The level-dependent maximum noise suppression function $f_{Level}(\omega)$ can be designed and tuned depending on targeted voice applications and/or devices. As shown in Figure 8B, the first knee point 801 corresponds to coordinate points ( $X_{Level}^{min}, f_{Level}^{min}$ ) respectively in the horizontal and vertical axis, and the second knee point 803 corresponds to coordinate points ( $X_{Level}^{max}, f_{Level}^{max}$ ) respectively in the horizontal and vertical axis. As said, the first knee point 801 and the second knee point 803 can be tuned. The number of knees can be also extended such that the level-dependent maximum noise suppression function $f_{Level}(\omega)$ may have more than two knee points. Furthermore, a linear line or a non-linear curve can be used to connect the knee points for mapping between the level of the input signal $X(\omega)$ represented in the vertical axis and the maximum amount of noise suppression represented in the vertical axis of Figure 7B.

The linear line or non-linear curve representing that the level-dependent maximum noise suppression function $f_{Level}(\omega)$) and mapping the level of the input signal $X(\omega)$ to the maximum amount of noise suppression can be determined either by tuning or by using a pre-defined curve. In the level-dependent scheme show in Figure 8B, more noise suppression is expected for higher level of input signal $X(\omega)$.

An example of how to calculate the level-dependent maximum noise suppression function $f_{Level}(\omega)$) mapping the level of the input signal $X(\omega)$ to the maximum amount of noise suppression by tunning will be explained now. Firstly the levels of the input signal in different segments containing silence, noise, sudden bursts of loud noise, and speech may be analysed. As shown in Figure9, by analysing segments 901 containing silence, 902 containing noise, 903 containing sudden bursts of loud noise, and 904 containing speech, a minimum level of input signal $X_{Level}^{min}$ and maximum level of input signal $X_{Level}^{max}$ can be determined. Then, the expected noise suppression amount for the minimum and maximum levels of the input signal can be determined respectively as $f_{Level}^{min}$ and $f_{Level}^{max}$ depending on use case or application such that the first knee point 701 ( $X_{Level}^{min}, f_{Level}^{min}$ ) and the second knee point 803 ( $X_{Level}^{max}, f_{Level}^{max}$ ) are obtained as shown in Figure 8B.

Other ways of designing the level-dependent maximum noise suppression function $f_{Level}(\omega)$ mapping the level of the input signal to the maximum amount of noise suppression may be used. The level of the input signal may be calculated in various ways. For instance, the level of the input signal may be the amplitude or magnitude of the input signal, the power amplitude of the input signal, the loudness of the input signal, or may be calculated from the input signal in any other suitable way.

In a second embodiment, the minimum gain can be calculated by combining SNR-and level-dependent maximum noise suppression schemes such that the optimal gain function $G(\omega)$ will be as shown below:

$$G(\omega) = \max\left(\tilde{G}(\omega), \min\left(G_{SNR}^{min}(\omega), G_{Level}^{min}(\omega)\right)\right) \quad (14)$$

where $G_{SNR}^{min}(\omega)$ and $G_{Level}^{min}(\omega)$ are respectively the SNR-dependent minimum gain and the level-dependent minimum gain and are already defined in equations (11) and (13), respectively.

Figure 10A shows an example of SNR-dependent maximum noise suppression scheme. Figure 10B shows an example of how to combine SNR- and level-dependent maximum noise suppression schemes. Fig 10A shows an example of SNR-dependent maximum noise suppression. So the amount of noise suppression is not related with the input signal level in x-axis. Fig 10B shows an example of SNR- and Level-dependent maximum noise suppression. That's why the maximum noise suppression is related with both the SNR estimates and the signal levels.

For Figure 10A, it is necessary to predefine SNR-dependent values ($SNR^{min}$, $SNR^{max}$, $f_{SNR}^{min}$, and $f_{SNR}^{max}$). Note that $X_{Level}^{min}$ and $X_{Level}^{max}$ are unused. For Figure 10B, it is necessary to predefine SNR-dependent values ($SNR^{min}$, $SNR^{max}$, $f_{SNR}^{min}$, and $f_{SNR}^{max}$) as well as level-dependent values ($X_{Level}^{min}$, $X_{Level}^{max}$, and, $f_{Level}^{max}$).

As said before, the SNR estimates can be different in each frequency band (or bin), and this is reflected with multiple lines 1002, 1004, 1006, 1008 in Figure 10A and 1012, 1014, 1016, 1018 in FigurelOB.

As mentioned above, the maximum noise suppression can be designed and tuned depending on voice applications and/or devices and the numbers of knees can be also extended. In addition, a linear or non-linear mapping curve can be used.

As a further alternative implementation of level-dependent maximum noise suppression, the maximum noise suppression amount can be adaptively applied depending on relative level of the input signal compared to the estimated level of stationary noise. Instead of using Fig 10(B), Equation (15) shows an alternative way of how to combine SNR- and Level-dependent minimum gains. In general, the estimated stationary noise $\hat{N}_{SN}(\omega)$ is continuously calculated based on a minimum tracking approach within every certain time window. The minimum gain can be adaptively selected from SNR-dependent and level-dependent minimum gains, as given by:

$$G^{min}(\omega) = \min\left(G_{SNR}^{min}(\omega), \frac{G_{SNR}^{min}(\omega) \cdot \hat{N}_{SN}(\omega) + \delta}{|X(\omega)|}\right) \quad (15)$$

where $\hat{N}_{SN}(\omega)$ is the estimated amplitude/magnitude of stationary noise, and $\delta$ is a given offset to avoid that $\frac{G_{SNR}^{min}(\omega) \cdot \hat{N}_{SN}(\omega)+\delta}{|X(\omega)|}$ *is* zero or a very small value. In addition, $X(\omega)$ is the input signal and $|X(\omega)|$ is the magnitude spectrum of $X(\omega)$.

For stationary noise segments, the first term of equation (15) which is the SNR-dependent minimum gain $G_{SNR}^{min}(\omega)$, and the second term of equation (15), which is the adaptive level-dependent minimum gain $\frac{G_{SNR}^{min}(\omega) \cdot \hat{N}_{SN}(\omega)+\delta}{|X(\omega)|}$, will be similar because the estimate of stationary noise $\hat{N}_{SN}(\omega)$ is closer to the magnitude spectrum of the input signal $|X(\omega)|$. For non-stationary noise segments or sudden bursts of noise, the second term becomes much smaller than the first term since the estimate of stationary noise $\hat{N}_{SN}(\omega)$ is much smaller than the magnitude spectrum of the input sign $|X(\omega)|$. Therefore, more aggressive noise suppression can be applied, compare to SNR-dependent maximum noise suppression. When the estimate of stationary noise $\hat{N}_{SN}(\omega)$ is much smaller than the magnitude spectrum of the input sign $|X(\omega)|$ during non-stationary noise or sudden bursts of noise, the second term becomes much lower than the first term. In this case, the minimum amount of residual noise is approximately $G_{SNR}^{min}(\omega) \cdot \hat{N}_{SN}(\omega)$.

In this case, the minimum gain is the second term in Equation (15) which is $\frac{G_{SNR}^{min}(\omega) \cdot \hat{N}_{SN}(\omega)+\delta}{|X(\omega)|}$.

If this minimum gain is multiplied by $X(\omega)$, the enhanced signal $\hat{S}(\omega) = G(\omega)X(\omega)$ is obtained as shown above in Equation (6), and the expected minimum amount of residual noise becomes, as said before, approximately ($G_{SNR}^{min}(\omega) \cdot \hat{N}_{SN}(\omega)$).

The the estimate of stationary noise $\hat{N}_{SN}(\omega)$ can be calculated by any well-known method such as the one described in "Computationally efficient speech enhancement by spectral minima tracking in subbands," by G. Doblinger, in Proc. 4th EUROSPEECH'95, pp. 1513-1516, Sept. 1995. The maximum noise suppression scheme can be applied in a loss function of training a DNN-based noise suppressors for pure DNN approach or hybrid approach. In addition, the maximum noise suppression scheme can be utilized to generate target variables for supervised learning. Figure 11 shows a flowchart of a method for level-dependent maximum noise suppression in a voice processing device according to an embodiment of the invention. In step 1102 of the method shown in Figure 11, the processor receives an input signal comprising noise. In step 1104, the processor determines a level-dependent maximum noise suppression based on a level of the input signal. Finally, in step 1106, the processor suppresses the noise of the input signal based on the level-dependent maximum noise suppression, wherein the level-dependent maximum noise suppression is higher for higher levels of the input signal.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the particular embodiments disclosed, but that the invention will include all embodiments falling within the scope of the appended claims.

Combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, 10 reference to an element by the indefinite article "a" or "an" does not exclude the possibility that more than one of the element is present, unless the context clearly requires that there be one and only one of the elements. The indefinite article "a" or "an" thus usually means "at least one".

## Claims

**1.** A method for level-dependent maximum noise suppression in a voice processing device, the method comprising:

Receiving (1102), by a processor, an input signal comprising noise;
Determining (1104), by the processor, a level-dependent minimum gain based on a level-dependent maximum noise suppression function and a level of the input signal; and
Suppressing (1106), by the processor, the noise of the input signal, wherein the noise is suppressed based on the level-dependent minimum gain, wherein the level-dependent maximum noise suppression function provides lower level-dependent minimum gain for higher levels of the input signal and wherein the level of the input signal comprises an amplitude or a power of the input signal.

**2.** The method according to claim 1 wherein the level-dependent minimum gain also depends on estimated noise spectra of the input signal.

**3.** The method of claim 2, wherein the noise is suppressed based on an optimal estimated gain which is the maximum of an estimated gain function and the level-dependent minimum gain, wherein the estimated gain function $\tilde{G}(\omega)$ is calculated as $\tilde{G}(\omega) = 1 - \alpha \frac{|\tilde{N}(\omega)|^\beta}{|X(\omega)|^\beta}$, wherein $\alpha$ is an over-subtraction factor and $|\tilde{N}(\omega)|$ is the estimated noise spectra , wherein $\beta$ is set to one when applying magnitude spectral subtraction or $\beta$ is set to two when applying power spectral subtraction; wherein the level-dependent minimum gain is calculated as $G_{Level}^{min}(\omega) = 10^{\left(\frac{-f_{Level}(\omega)}{20}\right)}$ and wherein the level-dependent maximum noise suppression function $f_{Level}(\omega))$ maps the level of the input signal $X(\omega)$ to the maximum amount of noise suppression.

**4.** The method according to claim 1, wherein the level-dependent maximum noise suppression function is a monotonically increasing function.

**5.** The method according to any of the previous claims, where the level-dependent maximum noise suppression function is a piecewise linear function.

**6.** The method according to any of the claims 1-4, where the level-dependent maximum noise suppression function is a non-linear function, such as a sigmoid shape.

**7.** The method according to any one of the claim 4 to 6, wherein determining, by the processor, the level-dependent minimum gain comprises determining whether the level of the input signal is lower or equal than a minimum level $X_{Level}^{min}$ and/or whether the level of the input signal is higher or equal than a maximum level $X_{Level}^{max}$, and wherein the minimum level $X_{Level}^{min}$ is lower than the maximum level $X_{Level}^{max}$ and wherein a first predetermined value $f_{Level}^{min}$ is lower than a second predetermined value $f_{Level}^{max}$; and if the level of the input signal is lower or equal than the minimum level $X_{Level}^{min}$, the level-dependent minimum gain is calculated based on the first predetermined value $f_{Level}^{min}$; and, if the level of the input signal is higher or equal than the maximum level $X_{Level}^{max}$, the level-dependent minimum gain is calculated based on the second predetermined value $f_{Level}^{max}$; and if the level of the input signal is lower than the maximum level $X_{Level}^{max}$ and the level of the input signal is higher than the minimum level $X_{Level}^{min}$, the level-dependent minimum gain is higher than the first predetermined value $f_{Level}^{min}$ and lower than the second predetermined value $f_{Level}^{max}$.

**8.** The method according to any of the previous claims, further comprising splitting the input signal into a plurality of frequency bands or bins and wherein determining, by the processor, the level-dependent minimum gain comprises determining a level-dependent minimum gain per frequency band or bin based on a level-dependent maximum noise suppression function for the corresponding frequency band or bin and a level of the input signal in the corresponding frequency band or bin.

**9.** The method according to any of the previous claims, further comprising:
determining, by the processor, a SNR-dependent minimum gain based on a SNR of the input signal; wherein the processor suppress the noise by combining the SNR dependent minimum gain and the level-dependent minimum gain.

**10.** The method according to claim 9, further comprising calculating a minimum value between the level-dependent minimum gain and the SNR-dependent minimum gain, and suppressing the noise based on the maximum of an estimated gain function and the minimum value, wherein the estimated gain function $\tilde{G}(\omega)$ is calculated based on estimated noise spectra and the spectral magnitude of the input signal.

**11.** The method according to claim 10, wherein the estimated gain function is calculated as $\tilde{G}(\omega) = 1 - \alpha \frac{|\tilde{N}(\omega)|^{\beta}}{|X(\omega)|^{\beta}}$, wherein $\alpha$ is an over-subtraction factor and $|\tilde{N}(\omega)|$ is the estimated noise spectra and, $|X(\omega)|$ the magnitude spectrum of the input signal, and $\beta$ is set to one when applying magnitude spectral subtraction or $\beta$ is set to two when applying power spectral subtraction.

**12.** The method according to claim 9 further comprising suppressing the noise based on a minimum between the SNR-dependent minimum gain and $\frac{G_{SNR}^{min}(\omega) \cdot \hat{N}_{SN}(\omega) + \delta}{|X(\omega)|}$ Where, $G_{SNR}^{min}(\omega)$ is the SNR-dependent minimum gain, $\hat{N}_{SN}(\omega)$ is a estimation of amplitude/magnitude of stationary noise of the input signal, $\delta$ is a given offset, $X(\omega)$ is the input signal and $|X(\omega)|$ is the magnitude spectrum of $X(\omega)$.

**13.** The method according to any of the previous claims wherein the processor is used in the target and/or loss function of training a neural network based noise suppressors.

**14.** An apparatus for level-dependent maximum noise suppression in a voice processing device, the apparatus comprising a memory and a processor communicatively connected to the memory and configured to execute instructions to perform the method according to any of claims 1 to 13.

**15.** Computer program which is arranged to perform the method according to one of claims 1 to 13.

Fig. 1

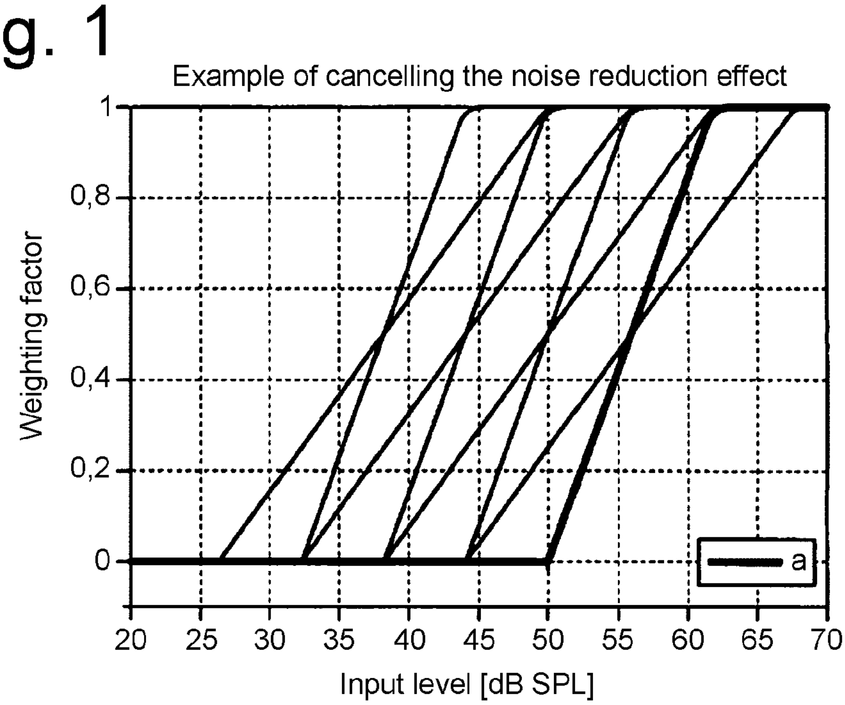


Fig. 2A

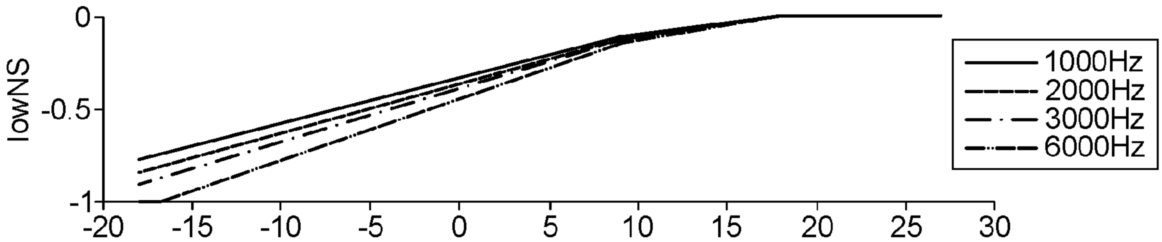


Fig. 2B

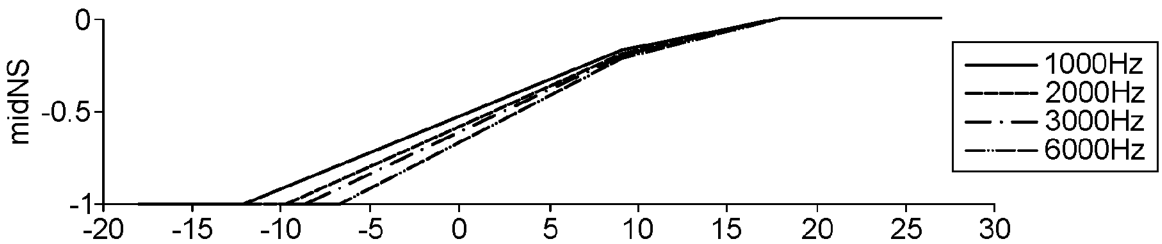


Fig. 2C

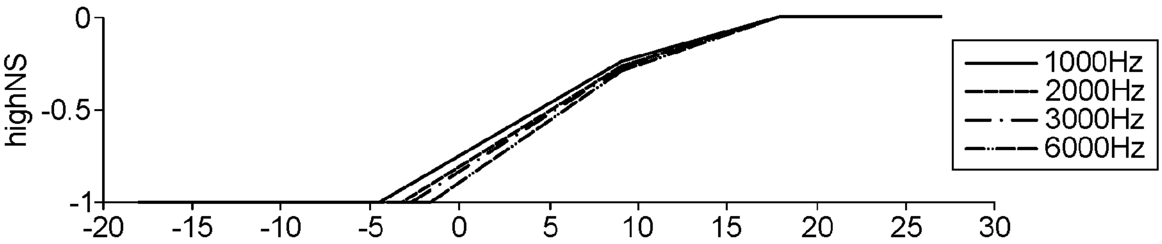

Fig. 3A

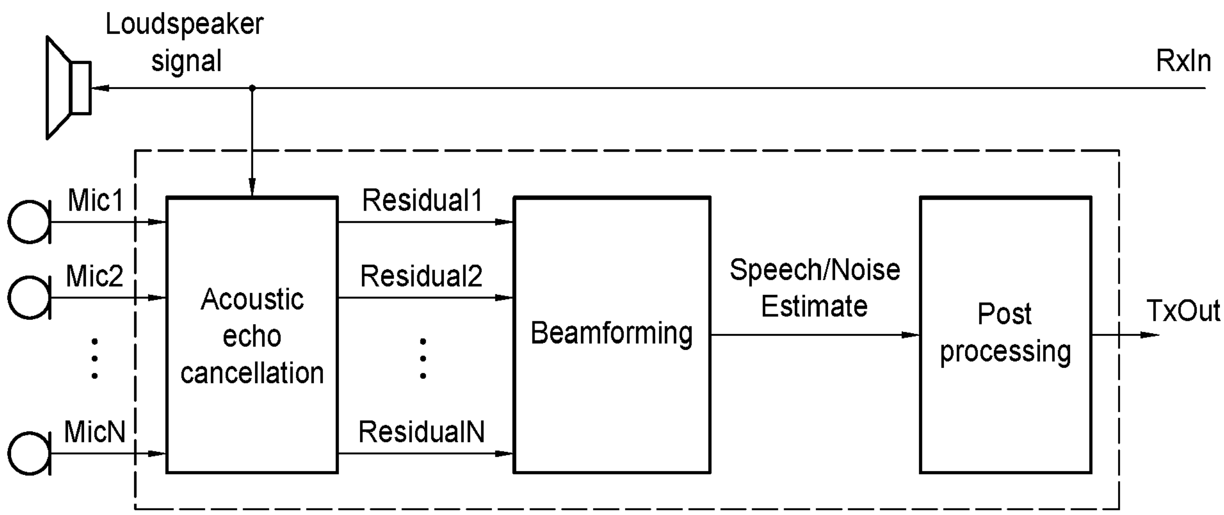
Loudspeaker signal
RxIn
Mic1
Mic2
MicN
Acoustic echo cancellation
Residual1
Residual2
ResidualN
Beamforming
Speech/Noise Estimate
Post processing
TxOut

Fig. 3B

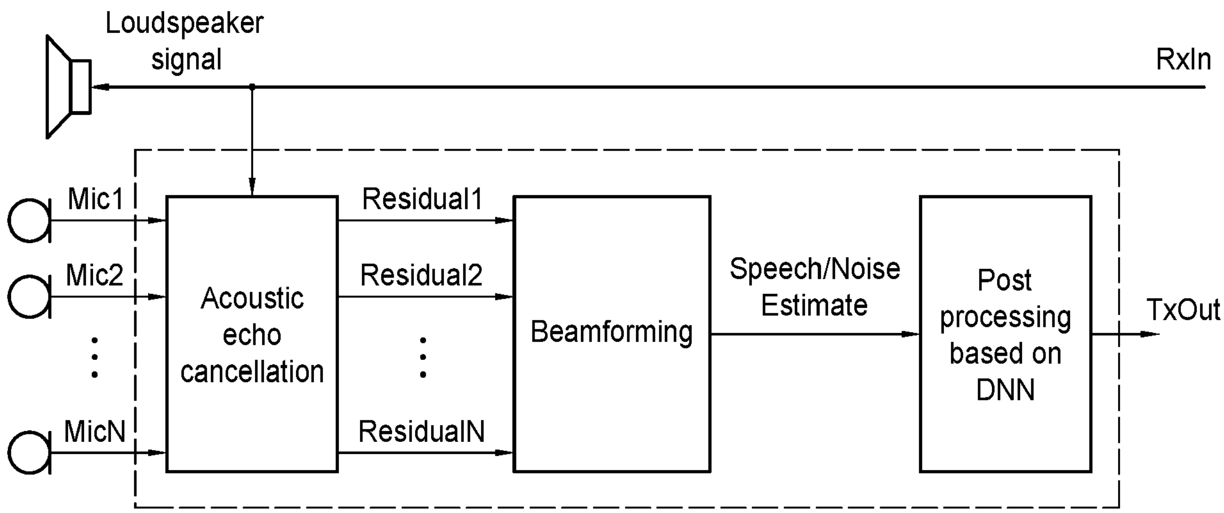
Loudspeaker signal
RxIn
Mic1
Mic2
MicN
Acoustic echo cancellation
Residual1
Residual2
ResidualN
Beamforming
Speech/Noise Estimate
Post processing based on DNN
TxOut

Fig. 3C

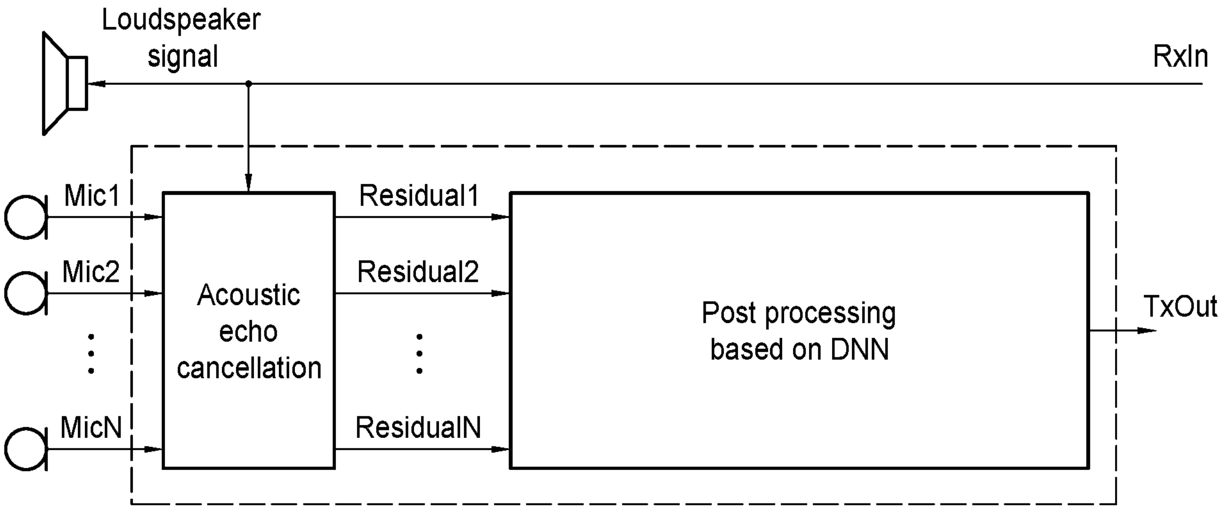
Loudspeaker
signal
RxIn
Mic1
Mic2
MicN
Acoustic
echo
cancellation
Residual1
Residual2
ResidualN
Post processing
based on DNN
TxOut

Fig. 3D

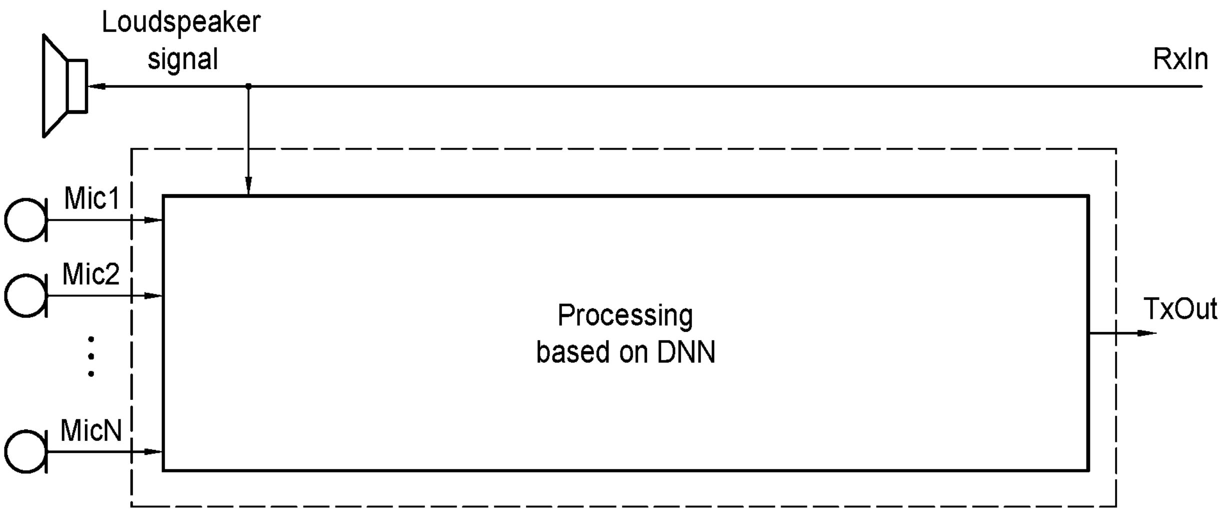
Loudspeaker
signal
RxIn
Mic1
Mic2
MicN
Processing
based on DNN
TxOut

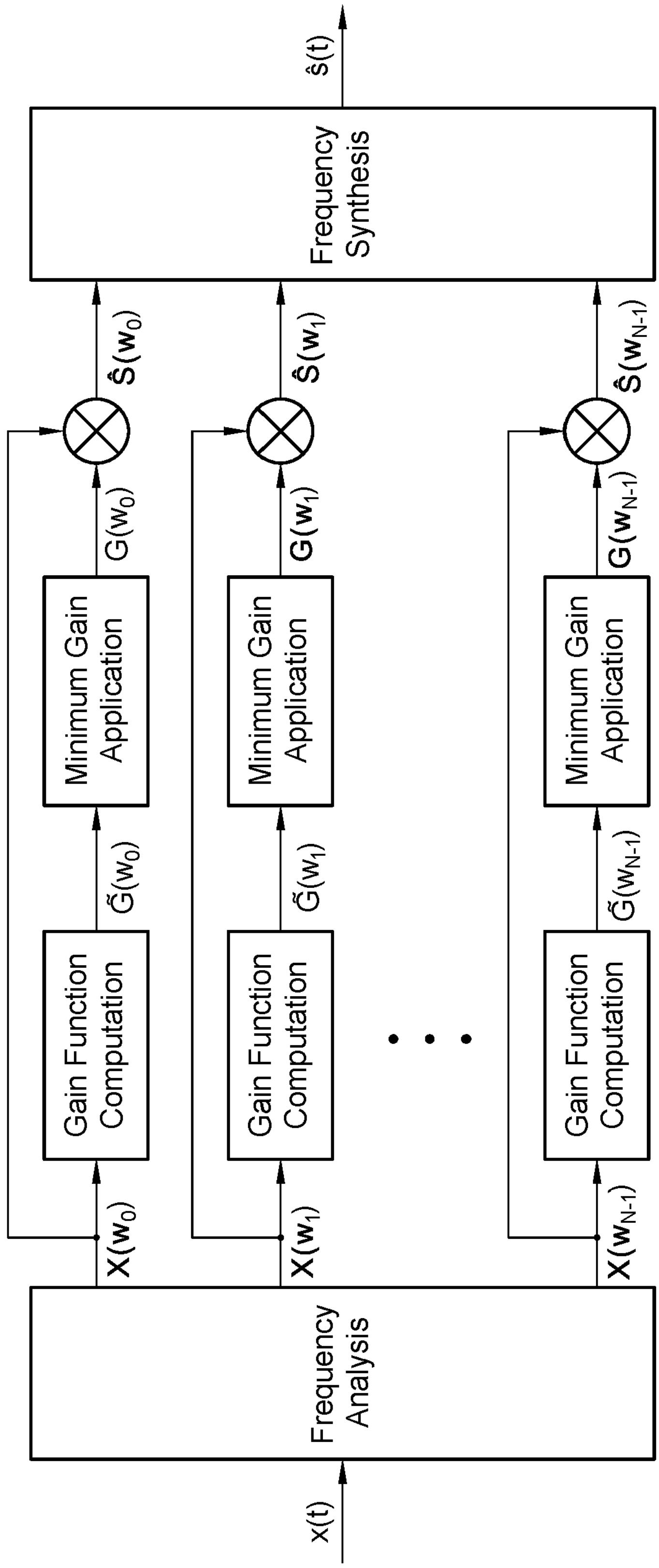
x(t)
Frequency Analysis
$X(w_0)$
$X(w_1)$
$X(w_{N-1})$
Gain Function Computation
$\tilde{G}(w_0)$
$\tilde{G}(w_1)$
$\tilde{G}(w_{N-1})$
Minimum Gain Application
$G(w_0)$
$G(w_1)$
$G(w_{N-1})$
$\hat{S}(w_0)$
$\hat{S}(w_1)$
$\hat{S}(w_{N-1})$
Frequency Synthesis
$\hat{s}(t)$

Fig. 4

Fig. 5A

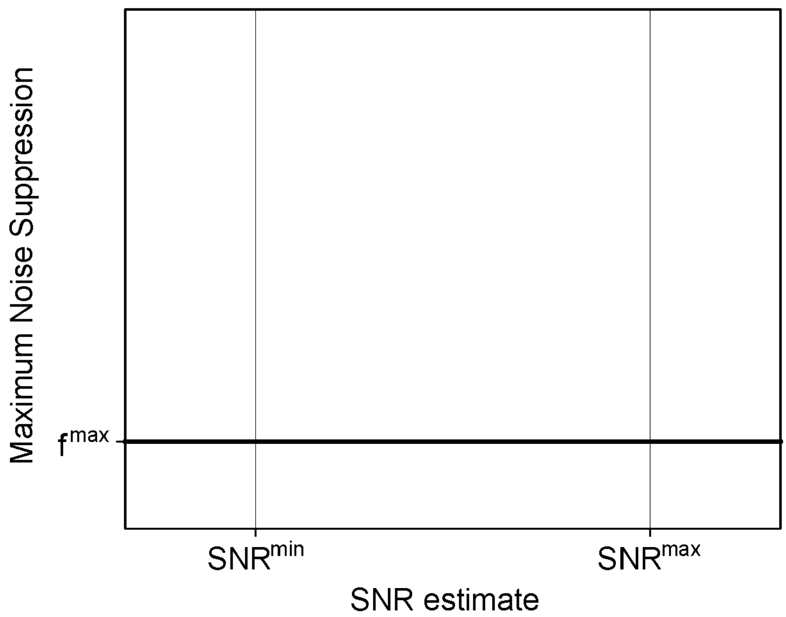
Maximum Noise Suppression
$f^{max}$
$SNR^{min}$
$SNR^{max}$
SNR estimate

Fig. 5B

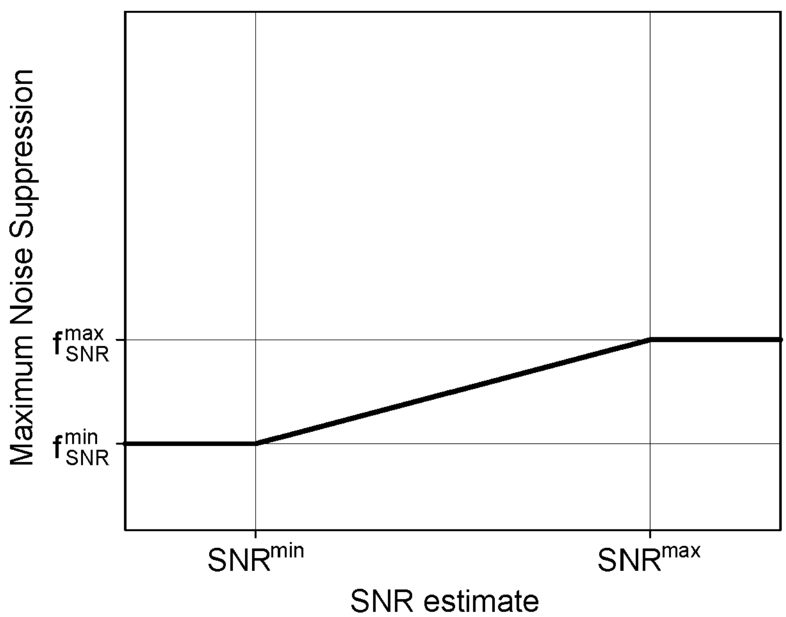
Maximum Noise Suppression
$f^{max}_{SNR}$
$f^{min}_{SNR}$
$SNR^{min}$
$SNR^{max}$
SNR estimate

Fig. 6

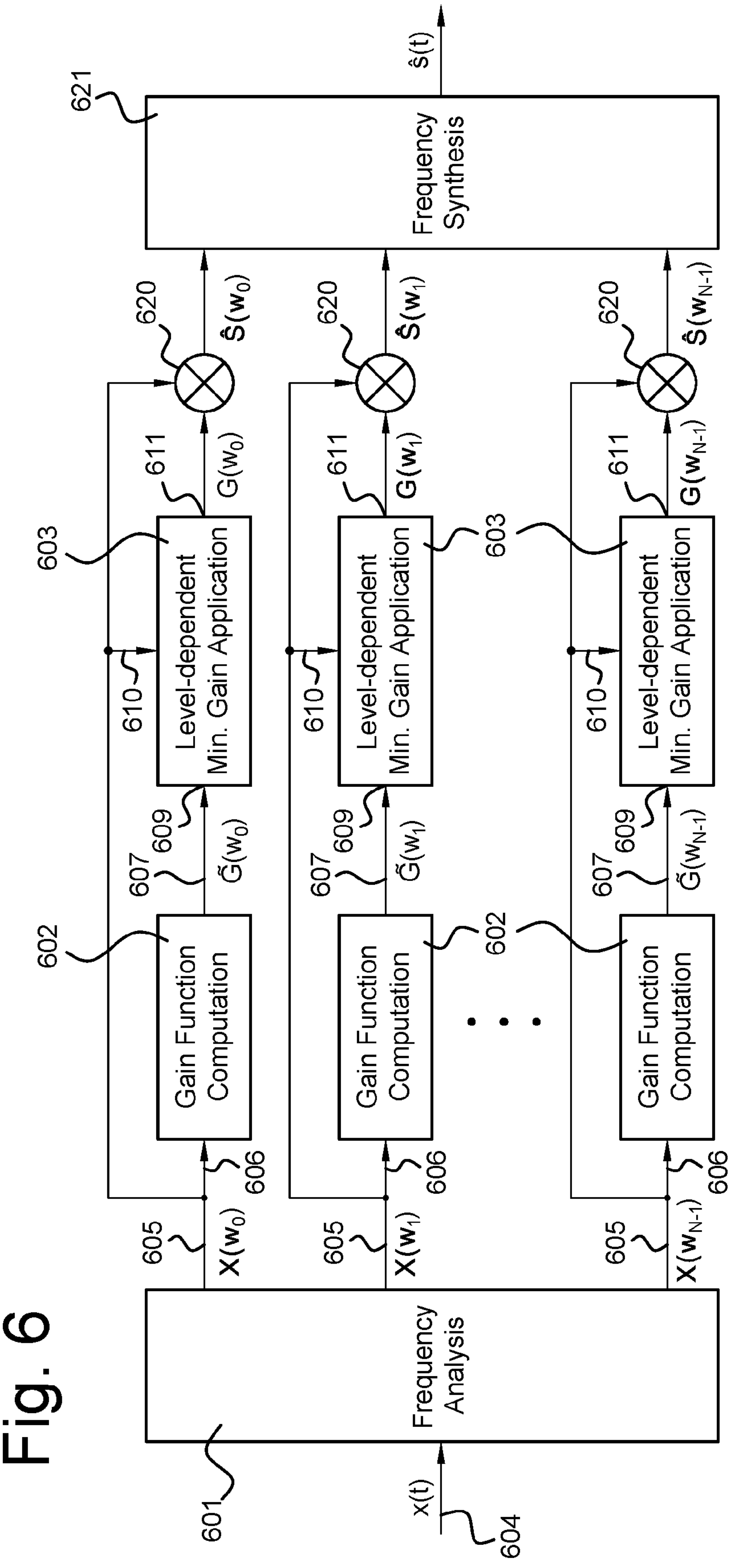

Frequency Analysis
Frequency Synthesis
Gain Function Computation
Level-dependent Min. Gain Application
x(t)
ŝ(t)
X(w0)
X(w1)
X(wN-1)
G̃(w0)
G̃(w1)
G̃(wN-1)
G(w0)
G(w1)
G(wN-1)
Ŝ(w0)
Ŝ(w1)
Ŝ(wN-1)
601
602
603
604
605
606
607
609
610
611
620
621

Fig. 7A

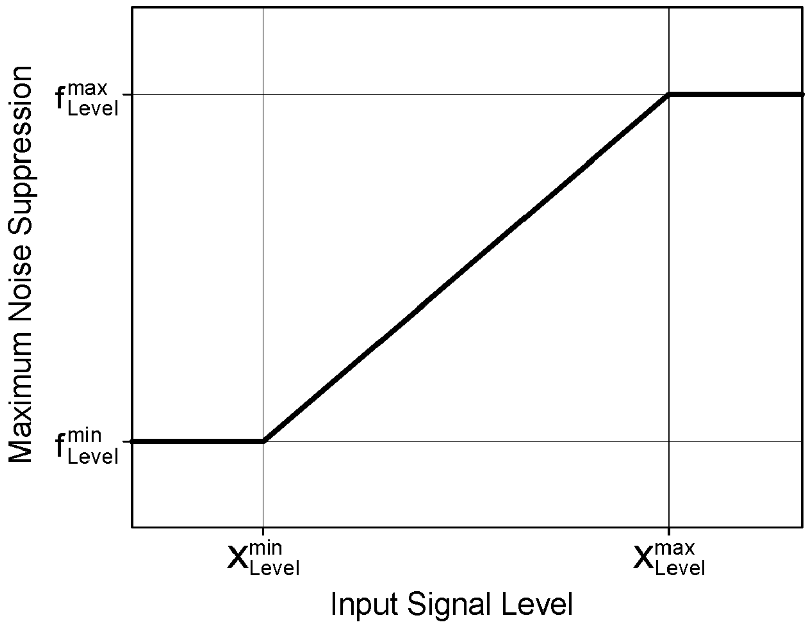
Maximum Noise Suppression
$f_{Level}^{max}$
$f_{Level}^{min}$
$x_{Level}^{min}$
$x_{Level}^{max}$
Input Signal Level

Fig. 7B

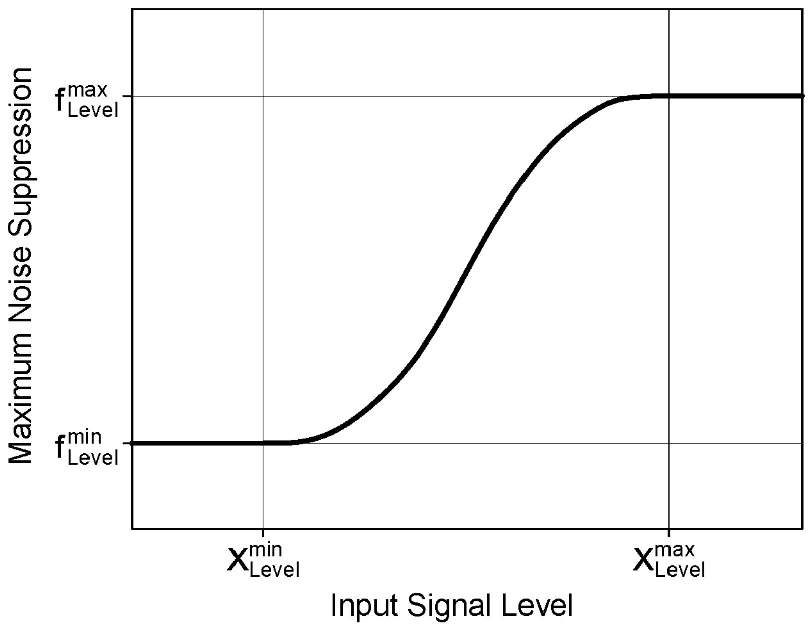
Maximum Noise Suppression
$f_{Level}^{max}$
$f_{Level}^{min}$
$x_{Level}^{min}$
$x_{Level}^{max}$
Input Signal Level

Fig. 8A

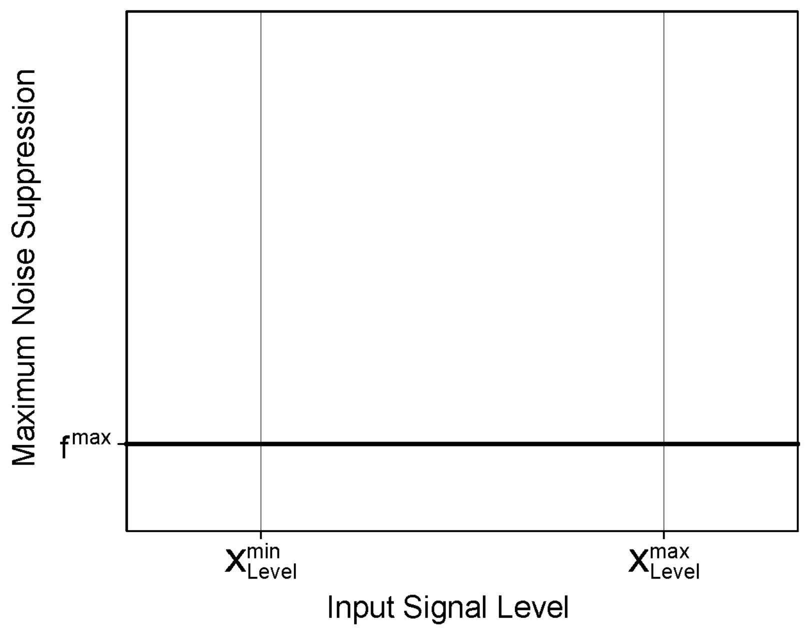
Maximum Noise Suppression
$f^{max}$
$X_{Level}^{min}$
$X_{Level}^{max}$
Input Signal Level

Fig. 8B

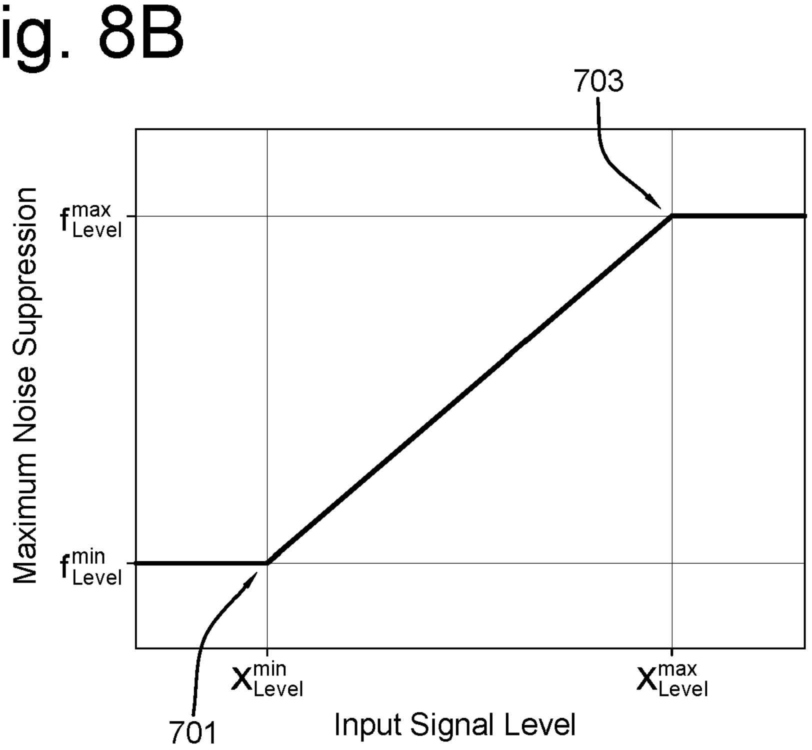
703
Maximum Noise Suppression
$f_{Level}^{max}$
$f_{Level}^{min}$
$X_{Level}^{min}$
$X_{Level}^{max}$
701
Input Signal Level

Fig. 9

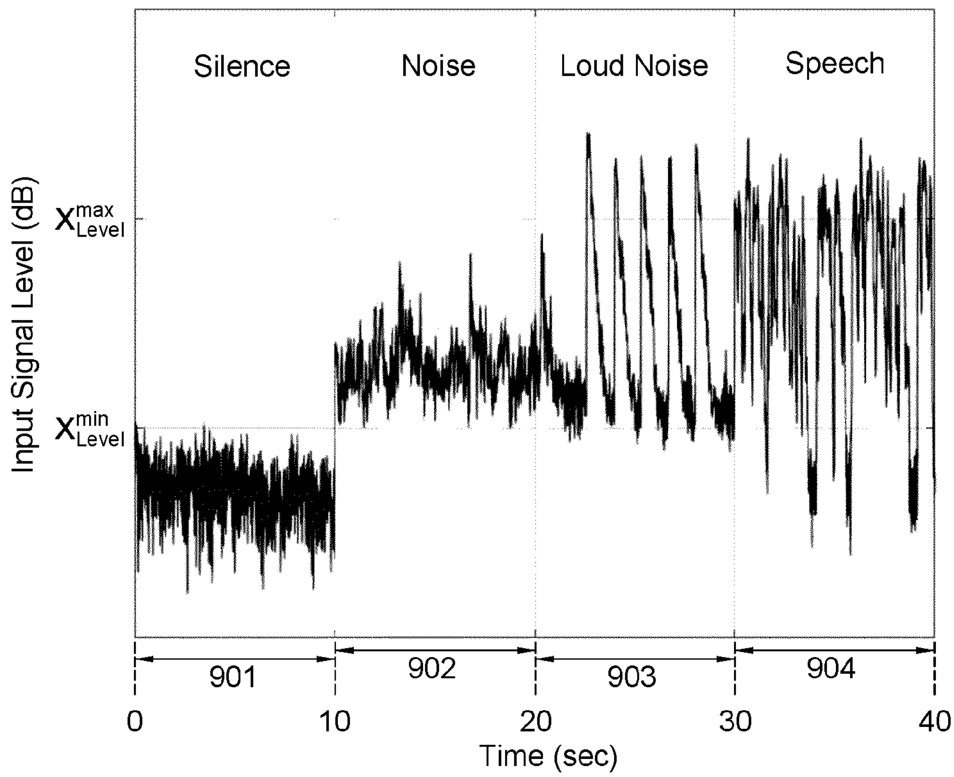
Silence
Noise
Loud Noise
Speech
Input Signal Level (dB)
$X_{Level}^{max}$
$X_{Level}^{min}$
901
902
903
904
0
10
20
30
40
Time (sec)

Fig. 10A

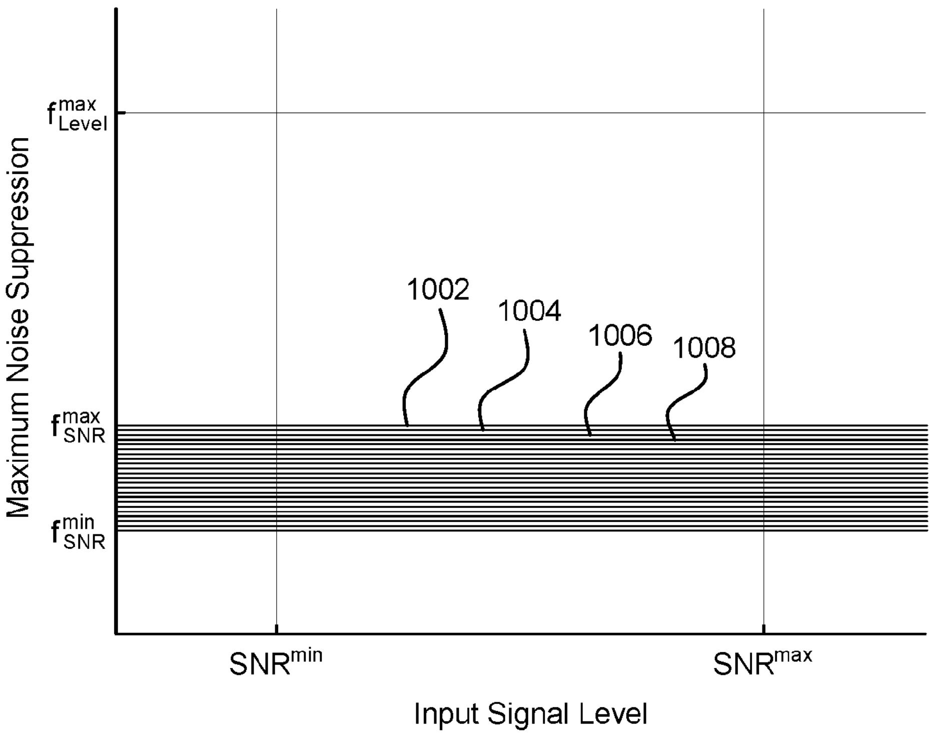
Maximum Noise Suppression
$f_{Level}^{max}$
$f_{SNR}^{max}$
$f_{SNR}^{min}$
1002
1004
1006
1008
$SNR^{min}$
$SNR^{max}$
Input Signal Level

Fig. 10B

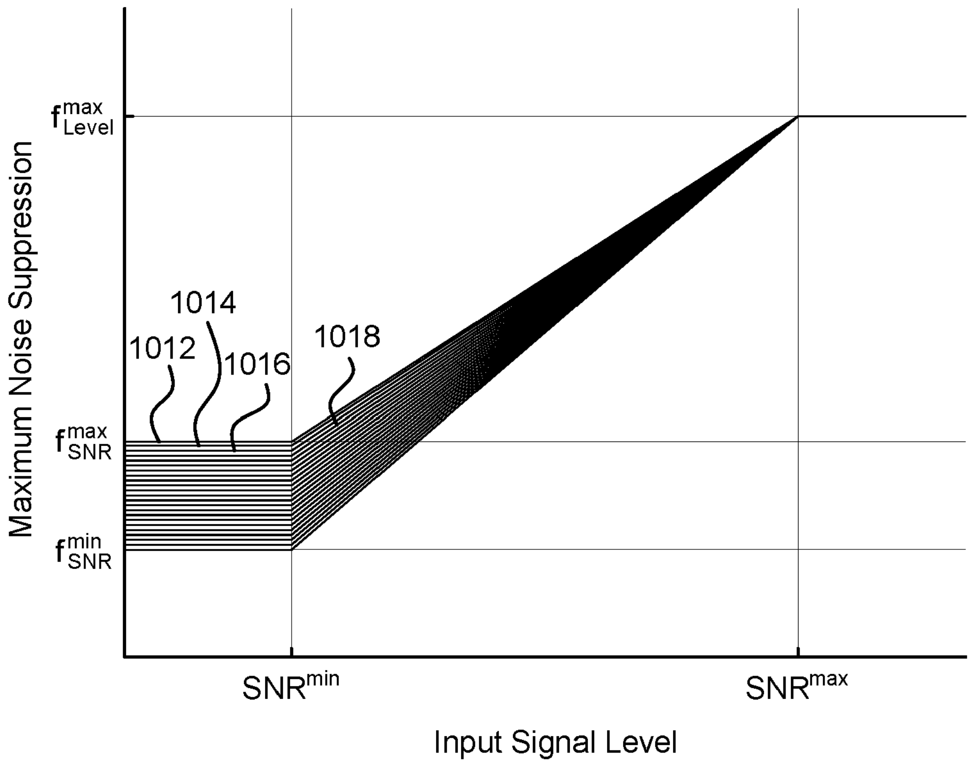


Fig. 11

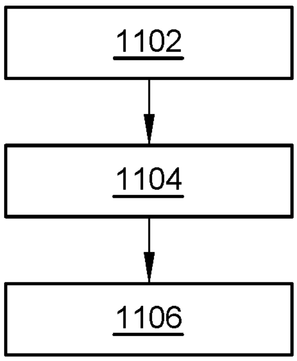

Europäisches Patentamt
European Patent Office
Office européen des brevets

# EUROPEAN SEARCH REPORT

Application Number
EP 23 18 8038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UPADHYAY NAVNEET ET AL: "Speech Enhancement using Spectral Subtraction-type Algorithms: A Comparison and Simulation Study", PROCEDIA COMPUTER SCIENCE, vol. 54, 21 August 2015 (2015-08-21), pages 574-584, XP093115843, AMSTERDAM, NL ISSN: 1877-0509, DOI: 10.1016/j.procs.2015.06.066 Retrieved from the Internet: URL:https://www.sciencedirect.com/science/article/pii/S1877050915013903/pdf?md5=e6fe6b7cb6a7a2f79299145c49076af8&pid=1-s2.0-S1877050915013903-main.pdf> * Equation 1 * * Equation 10 * * Equation 8 * * Equation 11 * * section 3A and 3B * ----- | 1-15 | INV. G10L21/0208 G10L21/0232 |
| X | Vaseghi Saeed: "SPECTRAL SUBTRACTION" In: "Advanced Digital Signal Processing and Noise Reduction,Second Edition", 1 January 2000 (2000-01-01), John Wiley & Sons Ltd., XP055853836, ISBN: 978-0-471-62692-3 pages 333-354, Retrieved from the Internet: URL:http://dsp-book.narod.ru/304.pdf> * section 11.3 * * page 348 * * page 345 * * Equations 11.24 and 11.25 * ----- | 1-15 | TECHNICAL FIELDS SEARCHED (IPC) G10L |

The present search report has been drawn up for all claims

| Place of search | Date of completion of the search | Examiner |
|---|---|---|
| The Hague | 5 January 2024 | Ziegler, Stefan |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8107656 B
- US 6757395 B


### Non-patent literature cited in the description


- A regression approach to speech enhancement based on deep neural networks. **Y. XU** ; **J. DU** ; **L.-R. DAI** ; **C.-H. LEE**. IEEE Transactions on Acoustic. Speech and Signal Processing, January 2015, 7-19
- **J. CHEN** ; **D. L. WANG**. Long short-term memory for speaker generalization in supervised speech separation. *The Journal of the Acoustical Society of America*, June 2017, 4705-4714
- **N. MAMUN** ; **S. KHORRAM** ; **J. HANSEN**. Convolutional Neural Network-based Speech Enhancement for Cochlear Implant Recipients. *arXiv: 1907.02526*, 2019
- **G. DOBLINGER**. Computationally efficient speech enhancement by spectral minima tracking in subbands. *Proc. 4th EUROSPEECH'95*, September 1995, 1513-1516